# FASCICULE DE BREVET EUROPEEN

(11) **EP 0 476 482 B1**
(45) Date de publication et mention de la délivrance du brevet: **25.01.1995**
(21) Numéro de dépôt: 91115236.1
(22) Date de dépôt: 10.09.1991
(51) Int. Cl.: G01P 15/10, G01P 1/02, G01D 11/24

(54) **Capteur de mesure d'une grandeur physique**
Sensor für eine physische Grösse
Sensor of a physical parameter

(30) Priorité: 17.09.1990 FR 9011530
(43) Date de publication de la demande: 25.03.1992
(73) Titulaire: ASULAB S.A., CH-2501 Bienne (CH)
(72) Inventeur: Froidevaux, Raymond, CH-2017 Boudry (CH)
(74) Mandataire: de Raemy, Jacques

(56) Documents cités:
- EP-A- 0 373 040
- GB-A- 2 176 607

## Description

L'invention concerne un capteur de mesure d'une grandeur physique. Plus particulièrement, elle concerne un capteur pourvu d'un support qui est élastiquement déformable sous l'effet d'une sollicitation extérieure, telle que par exemple une accélération, et qui est notamment destiné à recevoir des moyens de détection sensibles à cette sollicitation.

On connaît déjà des capteurs équipés de tels supports déformables. Les capteurs de ce type sont utilisés depuis longtemps dans des instruments de mesure de force, tels que des balances ou dans des moyens de mesure d'autres grandeurs physiques, telles que des pressions ou des accélérations. Ces dernières applications se sont d'ailleurs révélées très intéressantes dans le domaine de l'automobile ou l'on dispose ces capteurs à des endroits appropriés dans un véhicule, pour mesurer les accélérations subies par celui-ci et modifier en conséquence certains paramètres, voire faire intervenir différents organes de sécurité.

Sous leur forme la plus simple, ces capteurs comprennent un support déformable qui a la forme générale d'une poutre de section rectangulaire, cette poutre étant fixée en porte-à-faux sur un bâti. Ce support déformable qui est prévu pour fléchir selon au moins un axe sensible, sous l'action de la sollicitation extérieure, comporte un transducteur. Ce transducteur est fixé sur une grande face du support déformable, à égale distance de l'une ou de l'autre de ses extrémités. Ainsi, lorsque la poutre se déforme, le transducteur qui est par exemple constitué par un résonnateur à quartz en forme de double diapason, envoie une information sous la forme d'une variation de fréquence, vers un circuit de traitement de l'information. Pour diminuer les effets parasites (température), on utilise souvent un ou plusieurs autres transducteurs.

Dans le cas de capteurs de mesure formant accéléromètre, la poutre comporte à son extrémité libre une masse qui, sous l'action de l'accélération, se déplace en déformant le support.

Un capteur de ce type est décrit dans le document GB 2 176 607.

Pour obtenir des mesures fiables et précises avec ce type d'accéléromètre, il est nécessaire de le munir d'un dispositif d'amortissement permettant de supprimer un pic apparaissant à la fréquence de résonnance F₀ du système.

Parmi les solutions qui permettent d'éliminer ce pic à la résonnance, une solution particulièrement économique consiste à disposer la masse dans un logement solidaire du bâti pour former un amortissement pneumatique par passage d'un fluide entre deux chambres formées dans ce logement.

Pour produire un amortissement le plus efficace possible, on prévoit entre la masse et la paroi interne du logement un jeu très faible de l'ordre de 0,1 mm (0,1 · 10⁻³ mètres).

On comprend donc qu'il est extrêmement difficile, lors de l'assemblage, de monter avec précision la poutre munie de sa masse sur le bâti, pour que cette dernière se déplace librement dans le logement sans risque de contact avec la paroi interne du logement.

Ainsi, l'invention a-t-elle pour but de remédier à cet inconvénient en fournissant un capteur de mesure physique dont la poutre munie de sa masse peut être montée de façon précise pour présenter un fonctionnement fiable, et ce malgré un jeu extrêmement faible entre la masse et le logement dans lequel elle est destinée à se déplacer.

A cet effet, l'invention a pour objet un capteur de mesure d'une grandeur physique, du type comprenant :
- un bâti,
- au moins un support qui est élastiquement déformable sous l'action de ladite grandeur physique et qui est solidaire dudit bâti,
- au moins une masse reliée audit support,
- au moins un logement solidaire dudit bâti entourant ladite masse pour former des moyens d'amortissement de l'ensemble support - masse,
- au moins un moyen de détection solidaire du support et apte à fournir un signal représentatif de ladite grandeur physique en réponse à une déformation dudit support, ce capteur étant caractérisé en ce qu'il comporte des moyens de positionnement de la masse dans le logement.

Grâce à ces caractéristiques, on évite toute perturbation du fonctionnement du capteur due à un frottement intempestif de la masse contre la paroi interne de son logement, compte-tenu du faible jeu laissé entre ces éléments. Ces caractéristiques sont d'autant plus avantageuses que les perturbations de ce type ne sont pas détectables lors du montage.

Selon un mode de réalisation, les moyens de positionnement sont au moins en partie solidaires du support.

Selon un autre mode de réalisation, les moyens de positionnement comprennent deux ensembles orifice(s)-tenon(s) relativement distants, chacun de ces ensembles étant ménagé, d'une part, dans le support, et d'autre part, dans le bâti.

D'autres caractéristiques et avantages de la présente invention apparaîtront à la lumière de la description détaillée qui suit, d'un mode de réalisation de l'invention donné à titre d'exemple, en liaison avec les dessins annexés dans lesquels :
- la figure 1 est une vue en perspective éclatée d'un capteur de mesure selon l'invention,
- la figure 2 est une vue de dessus d'un support du capteur de la figure 1, muni de différents organes fonctionnels et prêt à être monté sur le bâti, et
- la figure 3 est une vue en coupe faite selon la ligne III-III de la figure 2.

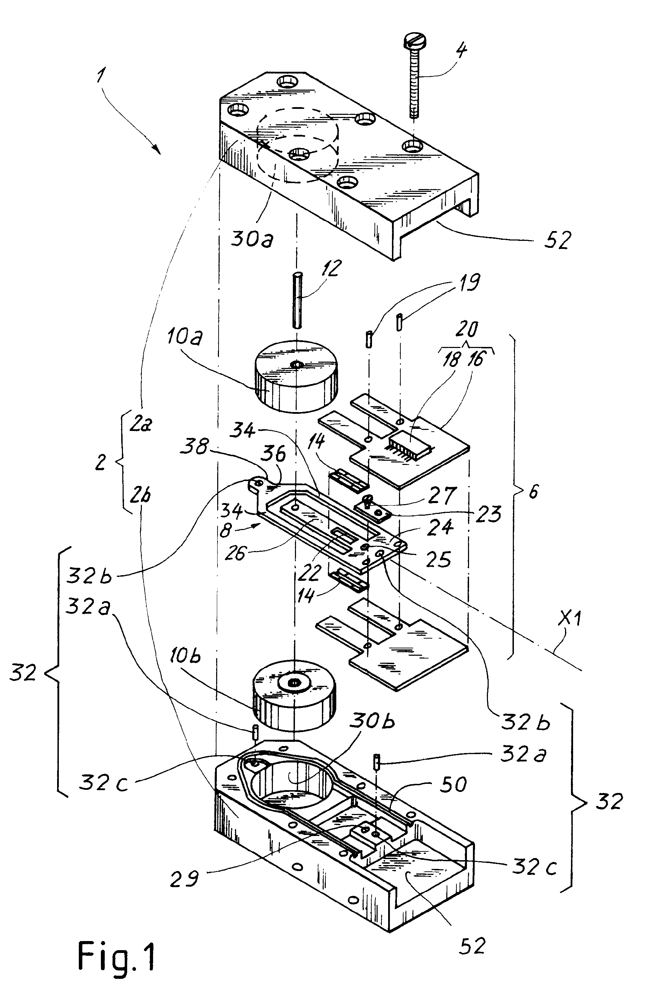

En se référant tout d'abord à la figure 1, on voit un mode de réalisation préféré du capteur de mesure selon l'invention, désigné par la référence numérique générale 1.

Ce capteur 1 comporte un bâti 2 qui est constitué de deux coques respectivement 2a et 2b ayant une forme similaire et destinées à être assemblées par l'intermédiaire de moyens de fixation, tels que des vis 4, dont une seule a été ici représentée.

Le bâti 2 est conformé pour recevoir une unité fonctionnelle 6 qui comprend un support 8 élastiquement déformable sous l'action d'une grandeur physique à capter ou à mesurer.

Sur le support 8 est assujettie une masse formée de deux demi-masses 10a et 10b reliées entre elles par un axe 12 chassé dans celles-ci. L'axe 12 traverse de part et d'autre le support 8 qui est pris en sandwich entre les deux demi-masses 10a et 10b.

Le support 8 comporte de plus deux moyens de détection 14 constitués, dans l'exemple représenté, par deux résonnateurs à quartz en forme de double diapason montés de part et d'autre du support 8.

Chaque résonnateur 14 est relié électriquement à une plaque de circuit imprimé correspondante 16 sur laquelle sont montés en surface des composants électroniques 18 dont un seul a été ici représenté. Les éléments 16 et 18 constituent un circuit électronique 20. De façon connue en soi, les résonnateurs 14 sont connectés dans des circuits oscillants, non référencés, dont les fréquences de résonnance varient en fonction de la déformation du support 8. Les circuits oscillants délivrent donc des signaux qui sont traîtés et analysés dans le circuit électronique 20. Celui-ci délivre un signal variable en fonction de la déformation du support 8 et donc, dans cet exemple, de l'accélération subie par les deux demi-masses 10a et 10b.

Dans cet exemple de réalisation, on a donc prévu deux plaques de circuit imprimé 16 disposées de part et d'autre du support 8 et fixées sur celui-ci par l'intermédiaire de tenons chassés 19 ou d'autres moyens analogues, tels que des vis, non représentées.

Il est en outre à noter qu'à l'endroit où sont montés les résonnateurs 14, le support 8 comporte sous chacun de ses moyens de détection ou résonnateur 14 une ouverture traversante 22 permettant à chaque résonnateur de vibrer librement.

Le support 8 comporte une base 24 qui est destinée à être fixée mécaniquement sur le bâti 2. A partir de cette base 24 s'étend un organe 26 de forme générale allongée qui est particulièrement apte à se déformer élastiquement par rapport à la base 24. Cet organe allongé a la forme d'une poutre de section rectangulaire fixée, dans cet exemple, en porte-à-faux sur le bâti 2.

La base 24 comprend en outre un orifice de passage 25 pour la fixation du support 8 sur la coque inférieure 2b du bâti 2. Cet orifice de fixation 25 est destiné à recevoir une vis 27 qui vient s'engager directement dans un alésage fileté 29 ménagé dans la coque 2b du bâti 2. Entre la vis 27 et la base 24 est interposée une bride 23 qui est maintenue en appui sur la base 24 pour coïncider avec le bord duquel fait saillie l'organe allongé ou poutre 26.

Le capteur de mesure selon l'invention comporte en outre des moyens d'amortissement constitués par des logements borgnes 30a et 30b ménagés respectivement dans la coque 2a et dans la coque 2b du bâti 2. Les logements 30a et 30b sont destinés à recevoir respectivement l'une des deux demi-masses 10a, 10b qui comportent notamment chacune une forme complémentaire à celle du logement correspondant.

A cet effet, on précisera que l'on peut utiliser une masse en une seule pièce ou comportant plus de deux pièces, dont la forme peut être quelconque, telle que par exemple cubique. Dans ce cas, les logements 30a et 30b présentent un pourtour complémentaire. Pour réaliser un amortissement du type pneumatique, on ménage un faible jeu, entre le pourtour extérieur de la masse et la paroi intérieure du logement, de l'ordre de 0,1 mm (0,1 · 10⁻³ mètre).

Selon l'invention, pour faciliter le montage de l'unité fonctionnelle 6 sur le bâti 2, et donc des demi-masses 10a et 10b dans leur logement respectif 30a ou 30b, le capteur de mesure 1 comporte des moyens de positionnement 32 de la masse dans chaque logement 30a, 30b. Les moyens de positionnement 32 sont au moins en partie solidaires du support 8 et ils comprennent deux ensembles tenon(s) 32a - orifice(s) 32b, 32c relativement distants, chacun de ces ensembles étant ménagé, d'une part, dans le bâti 2, et d'autre part, dans le support 8.

Les deux moyens de positionnement 32 sont ménagés sur un axe de positionnement X1, confondu avec l'axe longitudinal de la poutre 26.

Dans l'exemple représenté sur la figure 1, les tenons 32a sont chassés dans des orifices correspondants 32c ménagés dans la coque 2b du bâti 2, tandis que deux autres orifices 32b, qui sont chacun destinés à recevoir l'un des tenons 32a, sont ménagés dans le support 8. Deux autres orifices, non représentés et non référencés, identiques aux orifices 32c, sont ménagés dans la coque 2a du bâti 2 pour recevoir les extrémités libres des deux tenons 32a. Les orifices ménagés dans la coque 2a sont positionnés de sorte qu'ils coïncident axialement avec ceux de la coque 2b lorsque ces deux coques 2a et 2b sont assemblées l'une sur l'autre. On remarquera que dans ce mode de réalisation, les deux coques 2a et 2b sont de forme identique. Dans un autre mode de réalisation, on peut chasser directement les deux tenons 32a dans les orifices 32b ménagés dans le support 8. Dans d'autres modes de réalisation non représentés, ces tenons peuvent venir de matière, soit avec l'une des deux coques 2a ou 2b, soit avec le support 8.

Ainsi, dans le mode de réalisation représenté, on a prévu deux ensembles comportant chacun un tenon 32a et trois orifices 32b, 32c. Dans l'un des autres modes de réalisation non représentés, chaque ensemble comporte un tenon qui est formé par deux protubérances venant de matière avec le support en s'étendant coaxialement de part et d'autre de celui-ci et qui coopère avec deux orifices respectivement ménagés dans les coques inférieure et supérieure du support. Dans encore une autre variante non représentée, chaque ensemble comporte deux tenons venant respectivement de matière avec l'une des coques du bâti et montés en regard l'un de l'autre de façon coaxiale en s'engageant dans l'orifice ménagé dans le support. Pour chaque ensemble, on prévoit dans cette variante deux tenons et un seul orifice.

On comprend que lorsque toutes les pièces de la figure 1 sont assemblées, un premier ensemble tenon(s) 32a - orifice(s) 32b est solidaire de la base 24, tandis qu'un second ensemble est solidaire de deux extensions 34 s'étendant à partir de la base 24. Dans cet exemple, les deux extensions 34 ont la forme de bras qui s'étendent parallèlement à la poutre 26 en direction de l'extrémité libre de celle-ci. Les deux bras 34 s'étendent donc de part et d'autre de la poutre 26, sensiblement dans un même plan, et il se rejoignent au-delà de l'extrémité libre de cette poutre pour former autour de celle-ci un cadre de positionnement.

Bien que non représenté, on comprendra que le support 8 peut ne comporter qu'un seul bras 34 convenablement percé à son extrémité libre par un orifice débouchant formant l'orifice de positionnement 32b.

Avantageusement, dans l'exemple représenté, les deux bras 34 sont liés entre eux par l'intermédiaire d'un montant 36 formant jonction entre les deux bras 34 qui se rejoignent au voisinage et au-delà de l'extrémité libre de la poutre 26. Ce montant de jonction 36 comporte une protubérance 38 dans laquelle est directement ménagé l'orifice de positionnement 32b. Ainsi, le second ensemble tenon(s) 32a - orifice(s) 32b est ménagé dans le montant de jonction 36 des deux bras 34. De ce fait, puisque les bras 34 tout comme les orifices 32b, le montant 36 et la protubérance 38 sont intégralement formés dans le support 8, les moyens de positionnement, qui comportent de plus les tenons 32a et les orifices correspondants 32c ménagés dans les coques 2a et 2b, sont au moins en partie solidaires du support 8 et donc de la poutre 26.

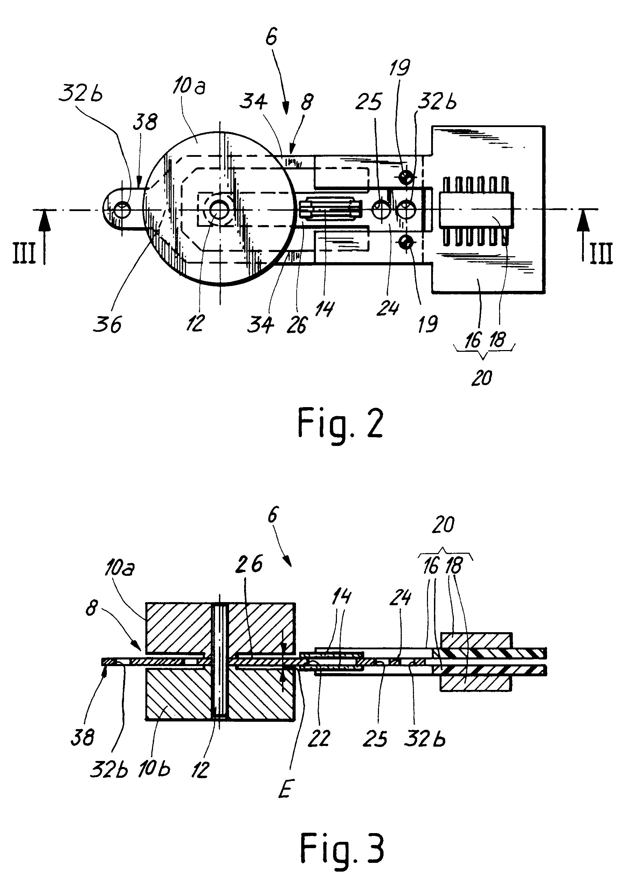

En se référant par ailleurs aux figures 2 et 3, on remarquera que les deux bras ou extensions 34 ainsi que le montant 36 sont partiellement logés dans un espace E laissé entre les deux demi-masses 10a et 10b. Ainsi, ces deux bras 34 et le montant 36 en s'étendant entre et sous les deux demi-masses 10a et 10b occupent un espace minimal et n'augmentent pas l'encombrement du capteur selon l'invention.

De plus, on précisera que le support 8 pourvu de ses moyens de positionnement est réalisé en une seule pièce obtenue par étampage, par exemple à froid, si bien que les moyens de positonnement selon l'invention, et notamment les bras 34, le montant de jonction 36 et les orifices 32b sont obtenus de préférence en une seule étape de fabrication et simultanément à la réalisation de la poutre 26, associée à sa base 24. On notera que le support 8 peut donc être aisément découpé à partir d'une bande de métal, de façon continue.

Pour assurer l'étanchéité du capteur 1, un joint, non représenté, est logé dans une gorge 50, réalisée par exemple dans la coque 2b. Lorsque le capteur 1 est monté, on coule dans un logement 52, ménagé en deux parties sur chaque coque 2a, 2b pour recevoir le circuit électronique 20, un joint liquide, tel qu'une résine silicone.

## Revendications

1. Capteur de mesure d'une grandeur physique du type comprenant :
- un bâti (2),
- au moins un support (8) qui est élastiquement déformable sous l'action de ladite grandeur physique et qui est solidaire dudit bâti (2),
- au moins une masse (10a, 10b) reliée audit support (8),
- au moins un logement (30a, 30b) solidaire dudit bâti (2) et entourant ladite masse (10a, 10b) avec un jeu faible pour former des moyens d'amortissement pneumatique de l'ensemble support-masse,
- au moins un moyen de détection (14, 20) solidaire du support (8) et apte à fournir un signal représentatif de ladite grandeur physique en réponse à une déformation dudit support (8), caractérisé en ce qu'il comporte des moyens de positionnement (32a, 32b, 32c, 34, 36, 38) de la masse dans ledit logement capables d'assurer le déplacement de la masse dans le logement sans contact ni frottement avec celui-ci.

2. Capteur de mesure selon la revendication 1, caractérisé en ce que les moyens de positionnement sont au moins en partie solidaires du support (8).

3. Capteur de mesure selon la revendication 1 ou 2, caractérisé en ce que les moyens de positionnement comprennent deux ensembles tenon(s) (32a) - orifice(s) (32b) relativement distants, chacun de ces ensembles étant ménagé en partie dans le support (8) et en partie dans le bâti (2).

4. Capteur de mesure selon l'une des revendications 1 à 3, dans lequel le support (8) comporte une base (24) destinée à être fixée mécaniquement sur le bâti (2) et à partir de laquelle s'étend un organe de forme générale allongée (26) qui supporte ladite masse (10a, 10b) et qui est apte à se déformer par rapport à la base (24) pour solliciter les moyens de détection, caractérisé en ce qu'un premier ensemble (32a, 32b) des moyens de positionnement (32) est solidaire de la base (24), tandis qu'un second ensemble (32a, 32b) est solidaire d'au moins une extension (34) s'étendant à partir de ladite base (24).

5. Capteur de mesure selon la revendication 4 dans lequel l'organe allongé (26) est une poutre s'étendant en porte-à-faux à partir de la base (24), caractérisé en ce que l'extension est constituée par au moins un bras (34) s'étendant parallèlement à la poutre (26) en direction de l'extrémité libre de celle-ci.

6. Capteur de mesure selon la revendication 5, caractérisé en ce qu'il comporte deux bras (34) s'étendant de part et d'autre de ladite poutre (26) et se rejoignant au-delà de l'extrémité libre de celle-ci pour former un cadre de positionnement.

7. Capteur de mesure selon la revendication 6, caractérisé en ce que le second ensemble (32a, 32b) est ménagé dans le montant de jonction (36) des deux bras (34).

8. Capteur de mesure selon l'une des revendications précédentes, caractérisé en ce que les orifices (32b) sont ménagés dans le support (8), tandis que les tenons (32a) sont chassés dans le bâti (2).

9. Capteur de mesure selon l'une quelconque des revendications précédentes, caractérisé en ce que le logement (30a, 30b) est ménagé dans le bâti (2).

10. Capteur de mesure selon la revendication 9, caractérisé en ce que le bâti (2) comprend deux coquilles (2a, 2b) entre lesquelles est interposé le support (8) muni de sa masse (10a, 10b).

## Patentansprüche

1. Meßfühler für eine physikalische Größe der Bauart, welche umfaßt:
- einen Rahmen (2),
- mindestens einen Support (8), der unter der Wirkung der genannten physikalischen Größe elastisch deformierbar ist und mit dem Rahmen (2) verbunden ist,
- mindestens eine mit dem Support (8) verbundene Masse (10, 10b),
- mindestens eine im dem Rahmen (2) vorgesehene und die Masse (10a, 10b) mit geringem Spiel umgebende Ausnehmung (30a, 30b) zur Bildung von pneumatischen Dämpfungsmitteln der Baugruppe Support-Masse,
- mindestens ein Detektormittel (14, 20), das mit dem Support (8) verbunden ist und ein Signal abzugeben in der Lage ist, das repräsentativ für die genannte physikalische Größe ist in Reaktion auf eine Deformation des Supports (8), dadurch gekennzeichnet, daß er Positioniermittel (32a, 32b, 32c, 34, 36, 38) der Masse in der Ausnehmung umfaßt, die in der Lage sind, die Verlagerung der Masse in der Ausnehmung ohne Kontakt und ohne Reibung mit derselben sicherzustellen.

2. Meßfühler nach Anspruch 1, dadurch gekennzeichnet, daß die Positioniermittel mindestens teilweise mit dem Support (8) verbunden sind.

3. Meßfühler nach Anspruch 1 oder 2, dadurch gekennzeichnet, daß die Positioniermittel zwei Gruppen Stift(e) (32a) - Ausnehmung(en) (32b) in relativem Abstand voneinander umfassen, wobei jede dieser Gruppen teilweise in den Support (8) und teilweise in den Rahmen (2) eingearbeitet sind.

4. Meßfühler nach einem der Ansprüche 1 bis 3, bei dem der Support (8) eine Basis (24) umfaßt, bestimmt, mechanisch an dem Rahmen (2) befestigt zu werden, und ausgehend von welcher sich ein generell längliches Organ (26) erstreckt, welches die Masse (10a, 10b) trägt und das in der Lage ist, sich relativ zu der Basis (24) zu deformieren, um die Detektormittel anzuregen, dadurch gekennzeichnet, daß eine erste Gruppe (32a, 32b) von Positioniermitteln (32) mit der Basis (24) verbunden ist, während eine zweite Gruppe (32a, 32b) mit mindestens einem Fortsatz (34) verbunden ist, der sich ausgehend von der Basis (24) erstreckt.

5. Meßfühler nach Anspruch 4, bei dem das längliche Organ (26) ein sich von der Basis (24) weg erstreckender Kragträger (26) ist, dadurch gekennzeichnet, daß die Verlängerung von mindestens einem Arm (34) gebildet wird, der sich parallel zu dem Kragträger (26) in Richtung des freien Endes desselben erstreckt.

6. Meßfühler nach Anspruch 5, dadurch gekennzeichnet, daß er zwei Arme (34) umfaßt, die sich beidseits des Kragträgers (26) erstrekken und sich jenseits des freien Endes desselben vereinigen, um einen Positionierrahmen zu bilden.

7. Meßfühler nach Anspruch 6, dadurch gekennzeichnet, daß die zweite Gruppe (32a, 32b) in die Verbindungsstrebe (36) der beiden Arme (34) eingearbeitet ist.

8. Meßfühler nach einem der vorangehenden Ansprüche, dadurch gekennzeichnet, daß die Öffnungen (32b) in den Support (8) eingearbeitet sind, während die Stifte (32a) in den Rahmen (2) eingetrieben sind.

9. Meßfühler nach einem der vorangehenden Ansprüche, dadurch gekennzeichnet, daß die Ausnehmung (30a, 30b) in den Rahmen (2) eingearbeitet ist.

10. Meßfühler nach Anspruch 9, dadurch gekennzeichnet, daß der Rahmen (2) zwei Schalen (2a, 2b) umfaßt, zwischen denen der mit seiner Masse (10a, 10b) versehene Support (8) eingefügt ist.

## Claims

1. Measurement sensor for measuring a physical parameter of the type comprising :
- a frame (2),
- at least one support (8) which is resiliently flexible under the action of said physical parameter and which is solid with said frame (2),
- at least one mass (10a, 10b) connected to said support (8),
- at least one housing (30a, 30b) solid with said frame (2) and surrounding said mass (10a, 10b) to form damping means for the support-mass assembly,
- at least one detection means (14, 20) solid with the support (8) and capable of supplying a signal representative of said physical parameter in response to flexion of said support (8), characterized in that it comprises means for positioning the mass (32a, 32b, 32c, 34, 36, 38) in said housing so as to assure the displacement of the mass in the housing without contact or friction therewith.

2. Measurement sensor according to claim 1, characterized in that the positioning means are at least solid with the support (8).

3. Measurement sensor according to claim 1 or 2, characterized in that the positioning means comprise two relatively spaced stud-opening assemblies (32a, 32b), each of these assemblies being provided partly in the support (8) and partly in the frame (2).

4. Measurement sensor according to one of claims 1 to 3 in which the support (8) has a base (24) designed to be mechanically fixed on the frame (2) and from which extends a substantially elongated member (26) which supports said mass (10a, 10b) and which is designed to deform in relation to the base (24) to trigger the detection means, characterized in that a first assembly (32a, 32b) of the positioning means (32) is solid with the base (24), whereas a second assembly (32a, 32b) is solid with at least one extension (34) extending from said base (24).

5. Measurement sensor according to claim 4 in which the elongated member (26) is a beam extending in overhanging manner from the base (24), characterized in that the extension is composed of at least one arm (34) extending parallel to the beam (26) in the direction of the free extremity thereof.

6. Measurement sensor according to claim 5, characterized in that it has two arms (34) extending on both sides of said beam (26) and joining up beyond the free extremity thereof to form a positioning frame.

7. Measurement sensor according to claim 6, characterized in that the second assembly (32a, 32b) is provided in the junction support member (36) of the two arms (34).

8. Measurement sensor according to any one of the preceding claims, characterized in that the openings (32b) are provided in the support (8), whereas the studs (32a) are driven into the frame (2).

9. Measurement sensor according to any one of the preceding claims, characterized in that the housing (30a, 30b) is provided in the frame (2).

10. Measurement sensor according to claim 9, characterized in that the frame (2) comprises two shells (2a, 2b) between which the support (8) provided with its mass (10a, 10b) is interposed.
